(19) Europäisches Patentamt
European Patent Office
Office européen des brevets

(11) EP 3 927 001 A1

(12) **EUROPEAN PATENT APPLICATION**
published in accordance with Art. 153(4) EPC

(43) Date of publication:
**22.12.2021 Bulletin 2021/51**

(21) Application number: **19914819.8**

(22) Date of filing: **31.12.2019**

(51) Int Cl.:
***H04W 24/02*** *(2009.01)*

(86) International application number:
**PCT/CN2019/130249**

(87) International publication number:
**WO 2020/164323 (20.08.2020 Gazette 2020/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.02.2019 CN 201910117664**

(71) Applicant: **ZTE Corporation**
**Shenzhen, Guangdong 518057 (CN)**

(72) Inventors:
- **WANG, Meiying**
  **Shenzhen, Guangdong 518057 (CN)**
- **WANG, Yanbo**
  **Shenzhen, Guangdong 518057 (CN)**
- **ZHOU, Jiangyun**
  **Shenzhen, Guangdong 518057 (CN)**

(74) Representative: **Betten & Resch**
**Patent- und Rechtsanwälte PartGmbB**
**Maximiliansplatz 14**
**80333 München (DE)**

# (54) METHOD, DEVICE, AND SYSTEM FOR TRANSMITTING SOUNDING REFERENCE SIGNAL

(57) Disclosed in embodiments of the present invention are a method, device, and system for transmitting a sounding reference signal (SRS). The method comprises: when a part of frequency domain range of the configured SRS is not in a frequency domain range of an activated bandwidth part (BWP), determining that a frequency domain range in which the SRS is actually transmitted is an overlapping portion of the frequency domain range of the configured SRS and the frequency domain range of the activated BWP. According to the embodiments of the present invention, when the part of frequency domain range of the configured SRS is not in the frequency domain range of the activated BWP, the frequency domain range in which the SRS is actually transmitted is defined in the overlapping portion of the frequency domain range of the configured SRS and the frequency domain range of the activated BWP, and the transmission of the SRS is implemented; furthermore, the complexity of a radio resource control (RRC) configuration parameter of the SRS is reduced, interference among different nodes during multi-BWP switching is reduced, and the resource utilization of the SRS configured in the multi-BWP is improved.

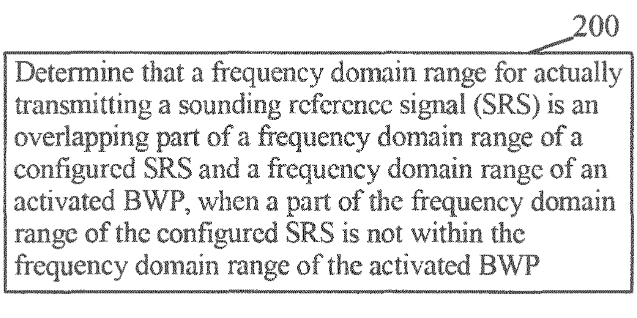


Fig. 2

EP 3 927 001 A1

## Description

### TECHNICAL FIELD

Embodiments of the present disclosure relate to, but not limited to, the field of mobile communication.

### BACKGROUND

The 3$^{rd}$ Generation Partnership Project (3GPP) defines a Sounding Reference Signal (SRS) for measuring the state of an uplink channel, and a network device may obtain the state of the uplink channel through the SRS sent by a terminal device. In the New Radio Access Technology (NR) of the 5$^{th}$-Generation communication system (5G), it is of great significance to know the accurate state of the uplink channel. However, in related technologies of the SRS transmission using BandWidth Part (BWP), there is a problem that the starting sending position of the SRS configured by the network device for the terminal device is not within the frequency domain range of the activated BWP of the terminal device, impairing the sending and receiving of the SRS and consequently the uplink channel quality.

### SUMMARY

The embodiments of the present disclosure provide a method, apparatus and system for transmitting sounding a reference signal, capable of realizing SRS transmission when a part of the frequency domain range of the configured SRS is not within the frequency domain range of the activated BWP.

The embodiments of the present disclosure provide a method for transmitting a sounding reference signal. The method may include: determining that a frequency domain range for actually transmitting a sounding reference signal (SRS) is an overlapping part of a frequency domain range of a configured SRS and a frequency domain range of an activated BandWidth Part (BWP), in response to a part of the frequency domain range of the configured SRS being not within the frequency domain range of the activated BWP.

The embodiments of the present disclosure further provide an apparatus for transmitting a sounding reference signal. The apparatus may include a determining module. The determining module is configured to determine that a frequency domain range for actually transmitting a SRS is an overlapping part of a frequency domain range of a configured SRS and a frequency domain range of an BWP, in response to a part of the frequency domain range of the configured SRS being not within the frequency domain range of the activated BWP.

The embodiments of the present disclosure further provide an apparatus for transmitting a sounding reference signal. The apparatus may include a processor and a computer-readable storage medium. Instructions are stored in the computer-readable storage medium, and when executed, causes the processor to carry out one of the methods for transmitting a sounding reference signal.

The embodiments of the present disclosure further provide a computer-readable storage medium. Computer program is stored in the computer-readable storage medium, and when executed, causes a processor to perform the steps of one of the methods for transmitting a sounding reference signal.

The embodiments of the present disclosure further provide a system for transmitting a sounding reference signal. The system may include a first node and a second node. The first nude is configured to determine that a frequency domain range for actually sending an SRS is an overlapping part of a frequency domain range of a configured SRS and a frequency domain range of an activated BWP, in response to a part of the frequency domain range of the configured SRS being not within the frequency domain range of the activated BWP. The second node is configured to determine that a frequency domain range for actually receiving the SRS is an overlapping part of the frequency domain range of the configured SRS and the frequency domain range of the activated BWP, in response to a part of the frequency domain range of the configured SRS being not within the frequency domain range of the activated BWP.

Other features and advantages of the embodiments of the present disclosure will be set forth in the following, and may partly become obvious from the description, or may be understood by implementing the embodiments of the present disclosure. The objects and other advantages of the embodiments of the present disclosure may be realized and obtained by the arrangements particularly specified in the description, claims and drawings.

### BRIEF DESCRIPTION OF DRAWINGS

The drawings are intended to provide a further understanding of the technical schemes of the embodiments of the present disclosure, and constitute a part of the description. They are used together with the embodiments of the present disclosure to interpret the technical schemes of the embodiments of the present disclosure, and do not constitute a restriction on the technical schemes of the embodiments of the present disclosure.

Fig. 1 is a schematic diagram of a frequency hopping pattern for transmitting a sounding reference signal under a configuration of related protocols;

Fig. 2 is a flowchart of a method for transmitting a sounding reference signal proposed in an embodiment of the present disclosure;

Fig. 3 is a flowchart of a method for transmitting a sounding reference signal proposed in an embodiment of the present disclosure;

Fig. 4a is a schematic diagram of the relationships among a frequency domain range of a configured SRS, a frequency domain range of an activated BWP and a frequency domain range for actually transmitting an SRS according to an embodiment of the present disclosure;

Fig. 4b is another schematic diagram of the relationships among the frequency domain range of the configured SRS, the frequency domain range of the activated BWP and the frequency domain range for actually transmitting the SRS according to an embodiment of the present disclosure;

Fig. 5 is a schematic diagram of a frequency hopping pattern for transmitting a sounding reference signal according to an embodiment of the present disclosure;

Fig. 6 is a schematic diagram illustrating the positions for actually transmitting and receiving an SRS in the case where multiple BWPs are configured in a cell in another embodiment of the present disclosure;

Fig. 7 is a schematic diagram of an apparatus for transmitting a sounding reference signal proposed in an embodiment of the present disclosure; and

Fig. 8 is a schematic diagram of a system for transmitting a sounding reference signal proposed in an embodiment of the present disclosure.

## DETAILED DESCRIPTION

As mentioned before, in the New Radio Access Technologies of the $5^{th}$-Generation communication system, it is of great significance to know the accurate state of an uplink channel. For example, the following objects can be achieved:

1) after obtaining states of a uplink channel at different frequency bands, a network device may allocate frequency bands with good quality for the uplink channel to a terminal device for transmission in a Physical Uplink Shared Channel (PUSCH), and may select different transmission parameters, for example, instantaneous data rate, and different parameters related to uplink multi-antenna transmission, through the SRS, that is, for uplink frequency-selective scheduling.

2) the SRS may be used to measure uplink Timing Advance (TA).

3) the SRS may be used for uplink beam management.

4) in a Time Division Duplexing (TDD) mode, the SRS may also be used to estimate downlink channel quality due to the reciprocity between uplink and downlink channels, to facilitate Downlink Beamforming (BF) for the terminal device.

In NR, the concept of BandWidth Part (BWP) is introduced, with which the frequency domain range of the BWP is determined by the location and bandwidth parameter locationAndBandwaidth (corresponding to the parameter locationAndBandwidth of the 3GPP 311 protocol), and the terminal operates in the BWP only. For the SRS transmission of the terminal device, the SRS is also at the BWP level, that is, the SRS transmission is performed within the BWP where the terminal operates. According to the 3GPP protocol, the starting position of the SRS sending bandwidth is denoted by an offset value parameter nshift (corresponding to the parameter freqDomainShift of the 3GPP 311 protocol), and the value of nshift indicates the offset between the starting position of the SRS sending bandwidth and a Common Resource Block (CRB) 0; each time the sending bandwidth of the SRS and the total sending bandwidth of the SRS are determined by an SRS bandwidth configuration parameter $C_{SRS}$ (corresponding to the parameter c-SRS of the 3GPP 331 protocol) and an SRS bandwidth configuration parameter $B_{SRS}$ (corresponding to the parameter b-SRS of the 3GPP 331 protocol); a frequency hopping pattern of the SRS is determined by an SRS frequency hopping configuration parameter $b_{hop}$ (corresponding to the parameter *SRS-FreqHopping* of the 3GPP 311 protocol) and a frequency domain starting position parameter nRRC (corresponding to the parameter freqDomainPosition of the 3GPP 311 protocol). For example, when locationAndBandwidth=1374 (indicating that the starting position of the BWP is CRB=0 and the number of RBs is 272), nshift=0 (indicating that the starting position of the SRS sending bandwidth is CRB 0), c-SRS=62 (indicating that the total sending bandwidth of the SRS is 272 RBs), b-SRS=1 (indicating that each sending bandwidth of the SRS is 68 RBs), b-hop=0 (indicating that the hopping bandwidth of the SRS is the total bandwidth) and nRRC=0 (indicating that the starting RB of the first SRS sending is CRB 0), according to the table of the 3GPP 211 protocol (Table 1 shows a part of the table of the 3GPP 211 protocol), it can be known that each time the sending bandwidth $m_{SRS}$ of the SRS is 68 RBs, and the total sending bandwidth of the SRS is $m_{SRS}N$=68 RB×4=272 RB, that is, the terminal device performs frequency hopping sending of the SRS in the BWP (CRBO-CRB271), as shown in Fig. 1. In the same way, the network device should receive the SRS at the corresponding frequency domain positions.

Table 1: bandwidth configuration table of the SRS (partial)

| $C_{SRS}$ | $B_{SRS}$ = 0 | | $B_{SRS}$ = 1 | | $B_{SRS}$ = 2 | | $B_{SRS}$ = 3 | |
|---|---|---|---|---|---|---|---|---|
| | $m_{SRS,0}$ | $N_0$ | $m_{SRS,1}$ | $N_1$ | $m_{SRS,2}$ | $N_2$ | $m_{SRS,3}$ | $N_3$ |
| 0 | 4 | 1 | 4 | 1 | 4 | 1 | 4 | 1 |
| ... | ... | ... | ... | ... | ... | ... | ... | ... |
| 62 | 272 | 1 | 68 | 4 | 4 | 17 | 4 | 1 |
| 63 | 272 | 1 | 16 | 17 | 8 | 2 | 4 | 2 |

However, in this context, there are still some problems in related technologies.

In some cases, the starting sending position of the SRS configured by the network device for the terminal device is not within the frequency domain range of the activated BWP of the terminal device, that is, the offset parameter nshift is not configured into the range of the BWP, resulting in that a part of the frequency domain range of the configured SRS is not configured into the range of the BWP. In this case, if the behaviors of the network device and the terminal device are not defined, the sending and receiving of the SRS are influenced, and consequently the uplink channel quality is impaired.

Hereinafter, the embodiments of the present disclosure will be described in detail with reference to the drawings. It is to be noted that, embodiments in the present disclosure and features in the embodiments may be combined to derive other embodiments not explicitly described.

The steps shown in the flowcharts of the drawings may be executed in, for example, a computer system with a set of computer-executable instructions. And, although a logical order is shown in the flowchart, in some cases, the steps shown or described may be executed in a different order from that here.

Referring to Fig. 2, according to an embodiment of the present disclosure provided is a method for transmitting a sounding reference signal. The method includes a following step.

At S200, it is determined that a frequency domain range for actually transmitting a sounding reference signal (SRS) is an overlapping part of a frequency domain range of a configured SRS and a frequency domain range of an activated bandwidth part (BWP), when a part of the frequency domain range of the configured SRS is not within the frequency domain range of the activated BWP.

In another embodiment of the present disclosure, when SRS frequency hopping is enabled, the method further includes: determining a frequency hopping pattern for actually transmitting the SRS according to a frequency hopping pattern of the configured SRS and the frequency domain range for actually transmitting the SRS, that is, the frequency hopping pattern for actually transmitting the SRS is an overlapping part of the frequency hopping pattern of the configured SRS and the frequency domain range for actually transmitting the SRS.

That is, when the SRS frequency hopping is not enabled, it is determined that the frequency domain range for actually transmitting the SRS is an overlapping part of the frequency domain range of the configured SRS and the frequency domain range of the activated BWP; and when the SRS frequency hopping is enabled, it is determined that the frequency domain range for actually transmitting the SRS is an overlapping part of the frequency domain range of the configured SRS and the frequency domain range of the activated BWP, and a frequency hopping pattern for actually transmitting the SRS is determined according to the frequency hopping pattern of the configured SRS and the frequency domain range for actually transmitting the SRS.

Whether or not the SRS frequency hopping is enabled is determined according to a frequency hopping configuration parameter $b_{hop}$. In some implementations, when $b_{hop}$ >= $B_{SRS}$, it is determined that SRS frequency hopping is not enabled; and when $b_{hop}$<$B_{SRS}$, it is determined that SRS frequency hopping is not enabled.

In the embodiment of the present disclosure, the frequency domain range of the configured SRS is determined by following parameters: the starting sending position of the configured SRS and the total sending bandwidth of the configured SRS. The frequency hopping pattern of the configured SRS is determined by following configuration parameters: the frequency hopping parameters of the configured SRS.

The starting sending position of the configured SRS is determined according to a configured offset value parameter nshift, the total sending bandwidth of the configured SRS is determined by the bandwidth configuration parameters $C_{SRS}$ and $B_{SRS}$, and the frequency hopping pattern of the configured SRS is determined by the configured SRS frequency hopping parameters $b_{hop}$ and nRRC, where $b_{hop}$ is a frequency hopping configuration parameter and nRRC is a frequency domain starting position parameter.

In the embodiment of the present disclosure, the frequency domain range of the configured SRS refers to the frequency domain range from the RB starting from the starting position of the configured SRS to the RB obtained by adding the total sending bandwidth of the configured SRS to the RB starting from the starting position of the configured SRS. The frequency hopping pattern of the configured SRS refers to the total bandwidth of frequency hopping and the location of frequency hopping.

In the embodiment of the present disclosure, the same frequency domain range of the configured SRS corresponds to at least one BWP.

In the embodiment of the present disclosure, the fact that a part of the frequency domain range of the configured SRS is not within the frequency domain range of the activated BWP includes at least one of the followings:

the starting sending position $n_{shift}$ of the configured SRS is not within the frequency domain range of the activated BWP; and

the ending sending position of the configured SRS is not within the frequency domain range of the activated BWP; and

where, the fact that the starting sending position of the configured SRS is not within the frequency domain range of the activated BWP includes: the starting sending position of the configured SRS satisfying $n_{shift} < N_{BWP}^{start}$ , and where, $n_{shift}$ is the starting sending position of the configured SRS, and $N_{BWP}^{start}$ is the starting position of the activated BWP.

In the embodiment of the present disclosure, when a part of the frequency domain range of the configured SRS is not within the frequency domain range of the activated BWP, the determining that a frequency domain range for actually transmitting an SRS is an overlapping part of a frequency domain range of a configured SRS and a frequency domain range of an activated BWP includes at least one of followings:

determining that the starting position for actually transmitting the SRS is the starting position of the activated BWP or the starting sending position of the configured SRS;

determining that the total bandwidth for actually transmitting the SRS is $N_{SRS}^{BW} = N_{BWP}^{size}$ or $N_{SRS}^{BW} = C_{srs} - N_{BWP}^{start}$ or $N_{SRS}^{BW} = N_{BWP}^{size} - n_{shift}$ , where $Csrs$ is the total sending bandwidth of the configured SRS, $N_{BWP}^{size}$ the bandwidth of the activated BWP, $N_{SRS}^{BW}$ is the total bandwidth for actually transmitting the SRS, $N_{BWP}^{start}$ is the starting position of the activated BWP, and $n_{shift}$ is the starting sending position of the configured SRS.

In some embodiments, when the starting sending position of the configured SRS is not within the frequency domain range of the activated BWP, and the ending sending position of the configured SRS is within the frequency domain range of the activated BWP, it is determined that the starting position for actually transmitting the SRS is the starting position of the activated BWP and the total bandwidth for actually transmitting the SRS is $N_{SRS}^{BW} = C_{srs} - N_{BWP}^{start}$ . When the starting sending position of the configured SRS is not within the frequency domain range of the activated BWP, and the ending sending position of the configured SRS is not within the frequency domain range of the activated BWP, it is determined that the starting position for actually transmitting the SRS is the starting position of the activated BWP, and the total bandwidth for actually transmitting the SRS is $N_{SRS}^{BW} = N_{BWP}^{size}$. When the starting sending position of the configured SRS is within the frequency domain range of the activated BWP, and the ending position of the configured SRS is not within the frequency domain range of the activated BWP, it is determined that the starting position for actually transmitting the SRS is the starting sending position of the configured SRS, and that the total bandwidth for actually transmitting the SRS is $N_{SRS}^{BW} = N_{BWP}^{size} - n_{shift}$.

In another embodiment of the present disclosure, when the frequency domain range of the configured SRS is within the frequency domain range of the activated BWP, the method further includes:
determining that the frequency domain range for actually transmitting the SRS is the frequency domain range of the configured SRS.

In an embodiment of the present disclosure, the fact that the frequency domain range of the configured SRS is within the frequency domain range of the activated BWP includes:
the starting sending position of the configured SRS being within the frequency domain range of the activated BWP, and the total sending bandwidth of the configured SRS satisfying $Csrs \leq N_{BWP}^{size} + N_{BWP}^{start} - n_{shift}$, where *Csrs* is the total sending bandwidth of the configured SRS, $N_{BWP}^{size}$ is the bandwidth of the activated BWP, $N_{BWP}^{start}$ is the starting position of the activated BWP, and $n_{shift}$ is the starting sending position of the configured SRS;

The fact that the starting sending position of the configured SRS is within the frequency domain range of the activated BWP includes:

the starting sending position of the configured SRS satisfying $n_{shift} \geq N_{BWP}^{start}$;

where $n_{shift}$ is the starting sending position of the configured SRS, and $N_{BWP}^{start}$ is the starting position of the activated BWP.

In the embodiment of the present disclosure, the determining that the frequency domain range for actually transmitting the SRS is the frequency domain range of the configured SRS includes:

determining that the starting position for actually transmitting the SRS is the starting position of the configured SRS, i.e. $N_{initialRB} = n_{shift}$, where $N_{initialRB}$ is the starting position for actually transmitting the SRS; and

determining that total bandwidth for actually transmitting the SRS is $N_{SRS}^{BW} = N_{BWP}^{size} - n_{shift}$, where $N_{SRS}^{BW}$ is the total bandwidth for actually transmitting the SRS.

According to the embodiment of the present disclosure, when a part of the frequency domain range of the configured SRS is not within the frequency domain range of the activated BWP, the frequency domain range for actually transmitting the SRS is limited to the overlapping part of the frequency domain range of the configured SRS and the frequency domain range of the activated BWP, thus to realize SRS transmission. Furthermore, the complexity of radio resource control (RRC) configuration parameters of the SRS, including parameters associated with $C_{srs}$, $B_{SRS}$, $b_{hop}$, nRRC, SRS and BWP, is reduced, the interference between different nodes during multi-BWP handover is reduced, and the resource utilization rate of the SRS configured under multi-BWP is improved.

The specific implementation process of the method of the embodiment of the present disclosure will be explained in detail through specific examples below, and the provided examples are not intended to limit the present disclosure.

Example I

As shown in Fig. 3, the method for transmitting a sounding reference signal provided in Example I of the present disclosure includes steps 301 to 307.

At step 301, a network device configures initial parameters of an SRS and initial parameters of a BWP associated with the SRS for a terminal device, and activates the BWP.

In this example, the initial parameters of the configured SRS include: nshift, $C_{SRS}$, $B_{SRS}$, $b_{hop}$ and nRRC.

The parameter nshift is used to determine the starting sending position of the configured SRS, the $C_{SRS}$ and the $B_{SRS}$ are used to determine each sending bandwidth of the SRS and the total sending bandwidth of the SRS, and the $b_{hop}$ and the nRRC are used to determine the frequency hopping pattern of the SRS.

Initial parameters of the configured BWP include locationAndBandwidth0-UP and locationAndBandwidth0-Down, where locationAndBandwidth0-UP is a uplink location and bandwidth parameter for the BWP, and locationAndBandwidth0-Down is a downlink location and bandwidth parameter for the BWP.

At step 302, the terminal device obtains the frequency domain range of the configured SRS and the frequency domain range of the activated BWP.

In this example, the frequency domain range of the configured SRS is determined by following parameters: the starting sending position of the configured SRS and the total sending bandwidth of the configured SRS. The starting sending position of the configured SRS is determined according to the configured offset value parameter nshift, and the total sending bandwidth of the configured SRS is determined by the values of the bandwidth configuration parameters CSRS and $B_{SRS}$.

In this example, the frequency domain range of the configured SRS refers to the frequency domain range from the RB starting from the starting position of the configured SRS to the RB obtained by adding the total sending bandwidth of the configured SRS to the RB starting from the starting position of the configured SRS.

At step 303, the terminal device and the network device judge whether the frequency domain range of the SRS is within the frequency domain range of the activated BWP, and execute step 304 when a part of the frequency domain range of the SRS is not within the frequency domain range of the activated BWP, and execute step 305 when the frequency domain range of the SRS is within the frequency domain range of the activated BWP.

At step 304, the terminal device judges whether SRS frequency hopping is enabled, and executes step 306 when SRS frequency hopping is enabled ($b_{hop} < B_{SRS}$), and executes step 307 when SRS frequency hopping is not enabled ($b_{hop} >= B_{SRS}$).

At step 305, the terminal device determines that the frequency domain range for actually transmitting the SRS is the frequency domain range of the configured SRS.

At step 306, the terminal device determines that the frequency domain range for actually transmitting the SRS is the overlapping part of the frequency domain range of the configured SRS and the frequency domain range of the activated BWP.

At step 307, the terminal device determines that the frequency domain range for actually transmitting the SRS is the overlapping part of the frequency domain range of the configured SRS and the frequency domain range of the activated BWP, and determines the frequency hopping pattern for actually transmitting the SRS according to the frequency hopping pattern of the configured SRS and the frequency domain range for actually transmitting the SRS.

When the SRS frequency hopping is not enabled, as shown in Fig. 4a and Fig. 4b, an example of the relationship among the frequency domain range of the configured SRS, the frequency domain range of the activated BWP and the frequency domain range for actually transmitting the SRS (i.e., the actual sending position of the SRS in Fig. 4a and Fig. 4b) is described as follows.

It can be seen from Fig. 4a and Fig. 4b that, the starting position of the SRS configured by the network device for the terminal device is $n_{shift}$, the total sending bandwidth of the SRS is *Csrs,* the starting position of the activated BWP is $N_{BWP}^{start}$, and the bandwidth of the activated BWP is $N_{BWP}^{size}$, where $n_{shift} < N_{BWP}^{start}$, then the starting position of terminal device and network device for actually sending and receiving the SRS is $N_{BWP}^{star}$, and the actual sending and receiving bandwidth is $N_{SRS}^{BW} = N_{BWP}^{size}$ or $N_{SRS}^{BW} = C_{srs} - N_{BWP}^{star}$. That is to say, it can be seen from the figures that the frequency domain position for actually sending and receiving the SRS by the terminal device and the network device (i.e., the frequency domain range for actually transmitting the SRS) is the overlapping part of the frequency domain position configured for the SRS and the frequency domain position of the activated BWP, and the non-overlapping part is not used for SRS sending and receiving.

When the SRS frequency hopping is enabled, an actual transmission pattern of the SRS is shown in Fig. 5, where the network side is configured with the parameters locationAndBandwidth=1374 (indicating that the starting position of the BWP is CRB=0 and the number of RBs is 272), nshift=0 (indicating that the starting position of the SRS sending bandwidth is CRB 0), c-SRS=62 (indicating that the total sending bandwidth of the SRS is 272 RBs), b-SRS=1 (indicating that the sending bandwidth of each SRS is 68 RBs), b-hop=0 (indicating that the hopping bandwidth of the SRS is the total bandwidth), and nRRC=0 (indicating that the starting RB of the first SRS sending is CRB 0). From the comparison between Fig. 5 and Fig. 1, it can be seen that, the frequency domain range for actually transmitting the SRS is an overlapping part of the frequency domain range of the configured SRS and the frequency domain range of the activated BWP, and the frequency hopping pattern is the frequency hopping parameter configuration of the configured SRS.

Example II

As shown in Fig. 6, an example of the positions for actually sending and receiving SRS when multiple BWPs are configured in a cell is described as follows.

It can be seen from the figure that, if a cell is configured with multiple BWPs (only one BWP is activated), the configurations of frequency domain location parameters of the SRS resources in these BWPs may be exactly the same, that is, the values of the offset value parameter nshift (corresponding to the protocol parameter freqDomainShift), the SRS frequency domain location index parameter nRRC (corresponding to the protocol parameter freqDomainPosition), the CSRS, the $B_{SRS}$ and the $b_{hop}$ are completely the same, and these BWPs are all based on the bandwidth of the maximum BWP. For example, a cell is configured with three BWPs with corresponding bandwidths of 60M, 80M and 100M. The BWP1 (60M) has a starting position of $N_{BWP1}^{size} = 0$ RB, and a bandwidth of $N_{BWP1}^{size} = 162$ RB; the BWP2 (80M) has a starting position of $N_{BWP2}^{start} = 0$ RB, and a bandwidth of $N_{BWP2}^{size} = 217$ RB; the BWP3 (100M) has a starting position of $N_{BWP3}^{start} = 0$ RB, and a bandwidth of $N_{BWP3}^{size} = 273$ RB. The SRS configuration parameters of the three BWPs are nshift=0, nRRC=0, CSRS=62, $B_{SRS}$ =1, and $b_{hop}$ =0. The actual sending position of the SRS in the three BWPs is shown in FIG. 6. It can be seen from Fig. 6 that, according to the SRS sending and receiving method of the embodiment of the present disclosure, the terminal device and the network device can only send and receive in the overlapping part of the frequency domain position of the configured SRS and the frequency domain position of the BWP, so that when the terminal device performs multi-BWP handover, there will be no interference between SRSs of different terminal device, which improves the performance of the SRS and increases the utilization rate of the SRS under multi-BWP.

In the embodiment of the present disclosure, first, the frequency domain range of the SRS configured by the network device for the terminal device is compared with the frequency domain range of the activated BWP to judge whether the frequency domain position of the configured SRS is within the frequency domain position range of the activated BWP, and determine whether to adjust the starting frequency domain position for actually transmitting the SRS accordingly. Then, the bandwidth parameter of the configured SRS (i.e., the total sending bandwidth of the configured SRS) is compared with the frequency domain position parameter of the BWP (i.e., the bandwidth of the activated BWP) to judge whether the frequency domain range of the configured SRS completely overlaps with that of the activated BWP, and determine whether to adjust the frequency domain range for actually transmitting the SRS accordingly. According to the embodiments of the present disclosure, when the SRS is not completely configured into the activated BWP, the behaviors of SRS receiving and sending by the network device and the terminal device may be determined. When the terminal device performs multi-BWP handover, the SRS frequency domain configurations of the same terminal device among multiple BWPs may be the same, thus greatly simplifying the configuration complexity of the SRS in multiple BWPs, avoiding collision among SRSs of different terminal devices, reducing SRS interference in the cell and increasing the resource utilization rate of the SRS under multiple BWPs.

Referring to Fig. 7, according to another embodiment of the present disclosure provided is an apparatus for transmitting a sounding reference signal. The device includes:

a determining module 701, configured to determine that a frequency domain range for actually transmitting a sounding reference signal (SRS) is an overlapping part of a frequency domain range of a configured SRS and a frequency domain range of an activated bandwidth part (BWP) when a part of the frequency domain range of the configured SRS is not within the frequency domain range of the activated BWP.

In another embodiment of the present disclosure, the determining module 701 is further configured to:

determine a frequency hopping pattern for actually transmitting an SRS according to a frequency hopping pattern of the configured SRS and the frequency domain range for actually transmitting the SRS, that is, the frequency hopping pattern for actually transmitting the SRS is an overlapping part of the configured frequency hopping pattern of the SRS and the frequency domain range for actually transmitting the SRS when SRS frequency hopping is enabled.

That is, when the SRS frequency hopping is not enabled, it is determined that the frequency domain range for actually transmitting the SRS is an overlapping part of the frequency domain range of the configured SRS and the frequency domain range of the activated BWP. When the SRS frequency hopping is enabled, it is determined that the frequency domain range for actually transmitting the SRS is an overlapping part of the frequency domain range of the configured SRS and the frequency domain range of the activated BWP, and a frequency hopping pattern for actually transmitting the SRS is determined according to the frequency hopping pattern of the configured SRS and the frequency domain range for actually transmitting the SRS.

The determining module 701 may determine whether the SRS frequency hopping is enabled according to the frequency hopping configuration parameter $b_{hop}$. In some embodiments, if $b_{hop} >= B_{SRS}$, it is determined that SRS frequency hopping is not enabled; and if $b_{hop} < B_{SRS}$, it is determined that SRS frequency hopping is not enabled.

In the embodiment of the present disclosure, the frequency domain range of the configured SRS is determined by the following parameters: the starting sending position of the configured SRS and the total sending bandwidth of the configured SRS. The frequency hopping pattern of the configured SRS is determined by the following configuration parameters: the frequency hopping parameters of the configured SRS.

The starting sending position of the configured SRS is determined according to a configured offset value parameter nshift, the total sending bandwidth of the configured SRS is determined by the bandwidth configuration parameters $C_{SRS}$ and $B_{SRS}$, and the frequency hopping pattern of the configured SRS is determined by the configured SRS frequency hopping parameters $b_{hop}$ and nRRC, where $b_{hop}$ is a frequency hopping configuration parameter and nRRC is a frequency domain starting position parameter.

In the embodiment of the present disclosure, the frequency domain range of the configured SRS refers to the frequency domain range from the RB starting from the starting position of the configured SRS to the RB obtained by adding the total sending bandwidth of the configured SRS to the RB starting from the starting position of the configured SRS. The frequency hopping pattern of the configured SRS refers to the total bandwidth of frequency hopping and the location of frequency hopping.

In the embodiment of the present disclosure, the same frequency domain range of the configured SRS corresponds to at least one BWP.

In the embodiment of the present disclosure, the fact that a part of the frequency domain range of the configured SRS is not within the frequency domain range of the activated BWP includes at least one of the following:

the starting sending position $n_{shift}$ of the configured SRS is not within the frequency domain range of the activated BWP;

the ending sending position of the configured SRS is not within the frequency domain range of the activated BWP.

The determining module 701 may be configured to implement the determining that a frequency domain range for actually transmitting an SRS is an overlapping part of a frequency domain range of a configured SRS and a frequency domain range of an activated BWP in at least one of the following ways:

determining that the starting position for actually transmitting the SRS is the starting position of the activated BWP or the starting sending position of the configured SRS; and

determining that the total bandwidth for actually transmitting the SRS is $N_{SRS}^{BW} = N_{BWP}^{size}$ or $N_{SRS}^{BW} = C_{srs} - N_{BWP}^{start}$ or $N_{SRS}^{BW} = N_{BWP}^{size} - n_{shift}$, where *Csrs* is the total sending bandwidth of the configured SRS, $N_{BWP}^{size}$ is the bandwidth of the activated BWP, $N_{SRS}^{BW}$ is the total bandwidth for actually transmitting the SRS, $N_{BWP}^{start}$ is the starting position of the activated BWP, and $n_{shift}$ is the starting sending position of the configured SRS.

In some embodiments, when the starting sending position of the configured SRS is not within the frequency domain range of the activated BWP, and the ending sending position of the configured SRS is within the frequency domain range of the activated BWP, it is determined that the starting position for actually transmitting the SRS is the starting position of the activated BWP, and the total bandwidth for actually transmitting the SRS is $N_{SRS}^{BW} = C_{srs} - N_{BWP}^{start}$. When the starting sending position of the configured SRS is not within the frequency domain range of the activated BWP, and the ending sending position of the configured SRS is not within the frequency domain range of the activated BWP, it is determined that the starting position for actually transmitting the SRS is the starting position of the activated BWP, and that the total bandwidth for actually transmitting the SRS is $N_{SRS}^{BW} = N_{BWP}^{size}$. When the starting sending position of the configured SRS is within the frequency domain range of the activated BWP, and the ending position of the configured SRS is not within the frequency domain range of the activated BWP, it is determined that the starting position for actually transmitting the SRS is the starting sending position of the configured SRS, and that the total bandwidth for actually transmitting the SRS is $N_{SRS}^{BW} = N_{BWP}^{size} - n_{shift}$.

In the embodiment of the present disclosure, the fact that the starting sending position of the configured SRS is not within the frequency domain range of the activated BWP includes:

the starting sending position of the configured SRS satisfies $n_{shift} < N_{BWP}^{start}$;

where $n_{shift}$ is the starting sending position of the configured SRS, and $N_{BWP}^{start}$ is the starting position of the activated BWP.

In another embodiment of the present disclosure, the determining module 701 is further configured to: determine that the frequency domain range for actually transmitting the SRS is the frequency domain range of the configured SRS when the frequency domain range of the configured SRS is within the frequency domain range of the activated BWP.

In the embodiment of the present disclosure, the fact that the frequency domain range of the configured SRS is within the frequency domain range of the activated BWP includes:
a starting sending position of the configured SRS is within the frequency domain range of the activated BWP, and a total sending bandwidth of the configured SRS satisfies $Csrs \leq N_{BWP}^{size} + N_{BWP}^{start} - n_{shift}$, where *Csrs* is the total sending bandwidth of the configured SRS, $N_{BWP}^{size}$ is a bandwidth of the activated BWP, $N_{BWP}^{start}$ is a starting position of the activated BWP, and $n_{shift}$ is the starting sending position of the configured SRS;

The determining module 701 may be configured to perform the determining that the frequency domain range for actually transmitting the SRS is the frequency domain range of the configured SRS in the following way:

determining that a starting position for actually transmitting the SRS is the starting sending position of the configured SRS, i.e. $N_{initialRB} = n_{shift}$, where $N_{initialRB}$ is the starting position for actually transmitting the SRS, and $n_{shift}$ is the starting sending position of the configured SRS; and

determining that a total bandwidth for actually transmitting the SRS is $N_{SRS}^{BW} = N_{BWP}^{size} - n_{shift}$, where $N_{SRS}^{BW}$ is the total bandwidth for actually transmitting the SRS.

In the embodiment of the present disclosure, the fact that the starting sending position of the configured SRS is within the frequency domain range of the activated BWP includes:

the starting sending position of the configured SRS satisfying $n_{shift} \geq N_{BWP}^{start}$;

where $n_{shift}$ is the starting sending position of the configured SRS, and $N_{BWP}^{start}$ is the starting position of the activated BWP.

According to the embodiment of the present disclosure, when a part of the frequency domain range of the configured SRS is not within the frequency domain range of the activated BWP, the frequency domain range for actually transmitting the SRS is limited to the overlapping part of the frequency domain range of the configured SRS and the frequency domain range of the activated BWP, thus realizing SRS transmission. Furthermore, the complexity of radio resource control (RRC) configuration parameters of the SRS (including parameters associated with $C_{srs}$, $B_{SRS}$, $b_{hop}$, nRRC, SRS and BWP) is reduced, meanwhile, the interference between different nodes during multi-BWP handover is reduced, and the resource utilization rate of the SRS configured under multi-BWP is improved.

According to another embodiment of the present disclosure provides is an apparatus for transmitting a sounding reference signal. The apparatus includes a processor and a computer-readable storage medium storing instructions. The instructions, when executed by the processor, cause the processor to carry out the methods for transmitting a sounding reference signal.

According to another embodiment of the present disclosure provided is a computer-readable storage medium storing a computer program. The computer program, when executed by a processor, causes the processor to carry out the methods for transmitting a sounding reference signal.

Referring to Fig. 8, according to another embodiment of the present disclosure provided is a system for transmitting a sounding reference signal. The system includes a first node 801 and a second node 802.

The first node 801 is configured to determine that a frequency domain range for actually sending an SRS is an overlapping part of a frequency domain range of a configured SRS and a frequency domain range of an activated BWP, when a part of the frequency domain range of the configured SRS is not within the frequency domain range of the activated BWP; and

The second node 802 is configured to determine that a frequency domain range for actually receiving the SRS is an overlapping part of the frequency domain range of the configured SRS and the frequency domain range of the activated BWP, when a part of the frequency domain range of the configured SRS is not within the frequency domain range of the activated BWP.

In an embodiment of the present disclosure, the first node 801 is further configured to determine a frequency hopping pattern for actually sending the SRS according to a frequency hopping pattern of the configured SRS and the frequency domain range for actually transmitting the SRS when SRS frequency hopping is enabled.

The second node 802 is further configured to determine a frequency hopping pattern for actually receiving the SRS according to the frequency hopping pattern of the configured SRS and the frequency domain range for actually transmitting the SRS when the SRS frequency hopping is enabled.

In an embodiment of the present disclosure, the first node 801 is further configured to determine that the frequency domain range for actually sending the SRS is the frequency domain range of the configured SRS when the frequency domain range of the configured SRS is within the frequency domain range of the activated BWP.

The second node 802 is further configured to determine that the frequency domain range for actually receiving SRS is the frequency domain range of the configured SRS when the frequency domain range of the configured SRS is within the frequency domain range of the activated BWP.

In an embodiment of the present disclosure, the first node 801 is further configured to determine that a starting position for actually sending the SRS is a starting sending position of the configured SRS, and a total bandwidth for actually sending the SRS is $N_{SRS}^{BW} = N_{BWP}^{size} \quad n_{shift},$ , when the starting sending position of the configured SRS is within the frequency domain range of the activated BWP and the total sending bandwidth of the configured SRS satisfies $Csrs \leq N_{BWP}^{size} + N_{BWP}^{start} - n_{shift}$ .

The second node 802 is further configured to determine that a starting position for actually receiving SRS is the starting sending position of the configured SRS, and determine a total bandwidth for actually receiving the SRS is $N_{SRS}^{BW} = N_{BWP}^{size} - n_{shift}$ , when the starting sending position of the configured SRS is within the frequency domain range of the activated BWP and the total sending bandwidth of the configured SRS satisfies $Csrs \leq N_{BWP}^{size} + N_{BWP}^{start} - n_{shift}$ .

Where, *Csrs* is the total sending bandwidth of the configured SRS, $N_{BWP}^{size}$ is a bandwidth of the activated BWP, $N_{BWP}^{start}$ is a starting position of the activated BWP, and $n_{shift}$ is the starting sending position of the configured SRS.

In an embodiment of the present disclosure, the fact that the starting sending position of the configured SRS is within the frequency domain range of the activated BWP includes:

the starting sending position of the configured SRS satisfying $n_{shift} \geq N_{BWP}^{start}$ ,

where $n_{shift}$ is the starting sending position of the configured SRS, and $N_{BWP}^{start}$ is the starting position of the activated BWP.

In an embodiment of the present disclosure, the first node 801 is further configured to:

when at least one of followings is satisfied:

the starting sending position of the configured SRS being not within the frequency domain range of the activated BWP; and

the ending sending position of the configured SRS being not within the frequency domain range of the activated BWP;

perform at least one of followings:

determining that a starting position for actually sending the SRS is the starting position of the activated BWP or the starting position of the configured SRS; and

determining that a total bandwidth for actually sending the SRS is $N_{SRS}^{BW} = N_{BWP}^{size}$ or $N_{SRS}^{BW} = C_{srs} - N_{BWP}^{start}$ or $N_{SRS}^{BW} = N_{BWP}^{size} - n_{shift}$ .

The second node 802 is further configured to:

when at least one of followings is satisfied:

the starting sending position of the configured SRS being not within the frequency domain range of the activated BWP; and

the ending sending position of the configured SRS being not within the frequency domain range of the activated BWP;

perform at least one of the following:

determining that a starting position for actually receiving the SRS is the starting position of the activated BWP or the starting sending position of the configured SRS; and

determining that the total bandwidth for actually receiving the SRS is $N_{SRS}^{BW} = N_{BWP}^{size}$ or $N_{SRS}^{BW} = C_{srs} - N_{BWP}^{start}$ or $N_{SRS}^{BW} = N_{BWP}^{size} - n_{shift}$ ;

Where, *Csrs* is the total sending bandwidth of the configured SRS, $N_{BWP}^{size}$ is the bandwidth of the activated BWP, $N_{BWP}^{start}$ is the starting position of the activated BWP, $N_{SRS}^{BW}$ is the total bandwidth for actually transmitting the SRS, and $n_{shift}$ is the starting sending position of the configured SRS.

In an embodiment of the present disclosure, the fact that the starting sending position of the configured SRS is not within the frequency domain range of the activated BWP includes:

the starting sending position of the configured SRS satisfying $n_{shift} < N_{BWP}^{start}$ ;

where $n_{shift}$ is the starting sending position of the configured SRS, and $N_{BWP}^{start}$ is the starting position of the activated BWP.

The specific implementation process of the above system for transmitting a sounding reference signal is the same as that of the method for transmitting a sounding reference signal in the previous embodiments, and will not be repeated here.

It should be understood by those having ordinary skill in the art that, the functions of each processing module in the algorithm of the present disclosure may be realized by programs running on a processor, or by a specific logic circuit, such as a central processing unit (CPU), a microprocessor (MPU), a digital signal processor (DSP), or a field programmable gate array (FPGA).

It should be understood that, the technical schemes of the present disclosure are applicable to various communication systems, such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) System, a Long Term Evolution-Advanced (LTE-A) System, a LTE Frequency Division Duplex (FDD) System, a LTE Time Division Duplex (TDD), a Universal Mobile Telecommunication System (UMTS), a Worldwide Interoperability for Microwave Access (WiMAX) communication system, a next-generation communication system (such as the fifth-generation (5G) communication system), a New Radio access technology (NR) system, a fusion system of multiple access systems, or an evolution system and so on.

It should be understood that, the network device mentioned in the present disclosure may be any kind of device with wireless sending and receiving functions or a chip that may be installed in the device, and the device includes but is not limited to: a base station (e.g., base station NodeB, an evolved base station eNodeB, a Next Generation (NR) base station (gNodeB), a network device in the fifth-generation (5G) communication system (such as a transmission point (TP), a transmission reception point (TRP), a small base station device and so on.), a network device in a future communication system, and a access node, a wireless relay node, a wireless backhaul node in a Wireless-Fidelity (Wi-Fi) system and so on.

It should be understood that, the terminal device may also be referred to as user device (UE), access terminal, user unit, user station, mobile station, remote station, remote terminal, mobile device, user terminal, terminal, wireless communication device, user agent or user apparatus. The terminal device in the embodiments of the present disclosure may be a mobile phone, a tablet computer (Pad), a computer with wireless sending and receiving functions, a virtual reality (VR) terminal device, an augmented reality (AR) terminal device, a wireless terminal in industrial control, a wireless terminal in self-driving, a wireless terminal in remote medical, a wireless terminal in smart grid, a wireless terminal in transportation safety, a wireless terminal in smart city, a wireless terminal in smart home, and so on. The embodiments of the present disclosure do not limit the present disclosure scenarios. In the present disclosure, the aforementioned terminal device and chips that may be installed in the aforementioned terminal device are collectively referred to as terminal device.

it should be understood that, in the embodiments provided by the present disclosure, the disclosed method and apparatus may be realized in other ways. The apparatus embodiments described above are only schematic. For example, the division of the modules is only a logical function division, and there may be other ways of division in actual implementation, for example, multiple modules or components may be combined or integrated into another system, or some features may be ignored or not executed. In addition, the communication connection between the components shown or discussed may be indirect coupling or communication connection through some interfaces, devices or modules, and may be electrical, mechanical or in other forms.

The modules described above as separated components may or may not be physically separated, and the components displayed as modules may or may not be physical modules, that is, they may be located in one place or distributed to multiple network modules. Some or all of the modules may be selected according to actual needs to achieve the objects of the embodiments.

In addition, all the functional modules in each embodiment of the present disclosure may be integrated into one processing module, or each module may be taken as one module separately, or two or more modules may be integrated into one module. The above integrated module may be implemented in the form of hardware, or in the form of hardware plus software functional modules.

All or part of the steps for implementing the above method embodiments may be completed by hardware related to program instructions, and the aforementioned program may be stored in a computer-readable storage medium, and when the program is executed, the steps including the above method embodiments are executed. The aforementioned storage medium may be one of various media that can store program codes, such as a mobile storage device, a read-only memory (ROM), a magnetic disk or an optical disk.

It can be understood by those having ordinary skill in the art that all or some of the steps, systems and functional modules/units in the apparatuses disclosed above may be implemented as software, firmware, hardware and appropriate combinations thereof. In the hardware implementation, the division between functional modules/units mentioned in the above description does not necessarily correspond to the division of physical components. For example, a physical component may have multiple functions, or a function or a step may be cooperatively executed by several physical components. Some or all of the components may be implemented as software executed by a processor, such as a digital signal processor or a microprocessor, or as hardware, or as an integrated circuit, such as an application-specific integrated circuit. Such software may be distributed on a computer-readable medium, and the computer-readable medium may include a computer storage medium (or a non-transitory medium) and a communication medium (or a transitory medium). As is well known to those having ordinary skill in the art, the term computer storage medium includes volatile and nonvolatile, removable and non-removable media implemented in any method or technology for storing information such as computer-readable instructions, data structures, program modules or other data. The computer storage medium includes but is not limited to a RAM, a ROM, an EEPROM, a flash memory or other memory technology, a CD-ROM, a digital versatile disk (DVD) or other optical disk storage, a magnetic box, a magnetic tape, a magnetic disk storage or other magnetic storage device, or any other medium that can be used to store desired information and can be accessed by a computer. Furthermore, it is well known to those having ordinary skill in the art that the communication medium typically contains computer-readable instructions, data structures, program modules or other data in a modulated data signal such as carrier waves or other transmission mechanisms, and may include any information delivery media.

Although the implementations disclosed in the embodiments of the present disclosure are as described above, the contents described are only the implementations for facilitating the understanding of the embodiments of the present disclosure, and are not intended to limit the embodiments of the present disclosure. Any person having ordinary skill in the field of the embodiments of the present disclosure may make any modifications and changes in the forms and details of implementation without departing from the spirit and scope disclosed by the embodiments of the present disclosure. However, the scope of patent protection of the embodiments of the present disclosure shall still be subject to the scope defined by the appended claims.

## Claims

**1.** A method for transmitting a sounding reference signal, comprising:
determining that a frequency domain range for actually transmitting a Sounding Reference Signal, SRS, is an overlapping part of a frequency domain range of a configured SRS and a frequency domain range of an activated BandWidth Part, BWP, in response to a part of the frequency domain range of the configured SRS being not within the frequency domain range of the activated BWP.

**2.** The method of claim 1, further comprising determining a frequency hopping pattern for actually transmitting the SRS according to a frequency hopping pattern of the configured SRS and the frequency domain range for actually transmitting SRS, in response to SRS frequency hopping being enabled.

**3.** The method of claim 2, wherein the frequency hopping pattern of the configured SRS is determined by frequency hopping parameters $b_{hop}$ and nRRC, wherein $b_{hop}$ is a frequency hopping configuration parameter and nRRC is a frequency domain starting position parameter.

**4.** The method of one of claims 1 to 3, further comprising determining that the frequency domain range for actually transmitting the SRS is the frequency domain range of the configured SRS, in response to the frequency domain range of the configured SRS being within the frequency domain range of the activated BWP,

**5.** The method of claim 4, wherein

the frequency domain range of the configured SRS being within the frequency domain range of the activated BWP comprises:
a starting sending position of the configured SRS being within the frequency domain range of the activated BWP, and a total sending bandwidth of the configured SRS satisfying $Csrs \leq N_{BWP}^{size} + N_{BWP}^{start} - n_{shift}$,
wherein *Csrs* is a total sending bandwidth of the configured SRS, $N_{BWP}^{size}$ is a bandwidth of the activated BWP, $N_{BWP}^{start}$ is a starting position of the activated BWP, and $n_{shift}$ is the starting sending position of the configured SRS; and
determining that the frequency domain range for actually transmitting the SRS is the frequency domain range of the configured SRS comprises:

determining that a starting position for actually transmitting the SRS is the starting sending position of the configured SRS; and
determining that a total bandwidth for actually transmitting the SRS is the total sending bandwidth of the configured SRS, wherein $N_{SRS}^{BW}$ is the total bandwidth for actually transmitting the SRS.

**6.** The method of claim 5, wherein the starting sending position of the configured SRS being within the frequency domain range of the activated BWP comprises:

the starting sending position of the configured SRS satisfying $n_{shift} \geq N_{BWP}^{start}$,
wherein $n_{shift}$ is the starting sending position of the configured SRS, and $N_{BWP}^{start}$ is the starting position of the activated BWP.

**7.** The method of one of claims 1 to 3, wherein,

a part of the frequency domain range of the configured SRS being not within the frequency domain range of the activated BWP comprises at least one of followings:

the starting sending position of the configured SRS being not within the frequency domain range of the activated BWP; and
the ending sending position of the configured SRS being not within the frequency domain range of the activated BWP; and

determining that a frequency domain range for actually transmitting the SRS is an overlapping part of a frequency domain range of a configured SRS and a frequency domain range of an activated BWP comprises at least one of followings:

determining that the starting position for actually transmitting the SRS is the starting position of the activated BWP or the starting sending position of the configured SRS; and

determining that the total bandwidth for actually transmitting the SRS is $N_{SRS}^{BW} = N_{BWP}^{size}$ or $N_{SRS}^{BW} = C_{srs} - N_{BWP}^{start}$ or $N_{SRS}^{BW} = N_{BWP}^{size} - n_{shift}$, wherein *Csrs* is the total sending bandwidth of the configured SRS, $N_{BWP}^{size}$ is the bandwidth of the activated BWP, $N_{SRS}^{BW}$ is the total bandwidth for actually transmitting the SRS, $N_{BWP}^{start}$ is the starting position of the activated BWP, and $n_{shift}$ is the starting sending position of the configured SRS.

**8.** The method of claim 7, wherein the starting sending position of the configured SRS being not within the frequency domain range of the activated BWP comprises:

the starting sending position of the configured SRS satisfying $n_{shift} < N_{BWP}^{start}$,

wherein $n_{shift}$ is the starting sending position of the configured SRS, and $N_{BWP}^{start}$ is the starting position of the activated BWP.

**9.** The method of claim 7 or 8, wherein:

determining that the starting position for actually transmitting the SRS is the starting position of the activated BWP, and determining the total bandwidth for actually transmitting the SRS is $N_{SRS}^{BW} = C_{srs} - N_{BWP}^{start}$, in response to the starting sending position of the configured SRS being not within the frequency domain range of the activated BWP and the ending sending position of the configured SRS being within the frequency domain range of the activated BWP;
determining that the starting position for actually transmitting the SRS is the starting position of the activated BWP, and the total bandwidth for actually transmitting the SRS is $N_{SRS}^{BW} = N_{BWP}^{size}$, in response to the starting sending position and the ending sending position of the configured SRS being not within the frequency domain range of the activated BWP; and
determining that the starting position for actually transmitting an SRS is the starting sending position of the configured SRS, and that the total bandwidth for actually transmitting an SRS is $N_{SRS}^{BW} = N_{BWP}^{size} - n_{shift}$, in response to the starting sending position of the configured SRS being within the frequency domain range of the activated BWP, and the ending sending position of the configured SRS being not within the frequency domain range of the activated BWP;

wherein *Csrs* is the total sending bandwidth of the configured SRS, $N_{BWP}^{size}$ is the bandwidth of the activated BWP, $N_{BWP}^{start}$ is the starting position of the activated BWP, $N_{SRS}^{BW}$ is the total bandwidth for actually transmitting the SRS, and $n_{shift}$ is the starting sending position of the configured SRS.

**10.** The method of one of claims 1 to 3, wherein the same frequency domain range of the configured SRS corresponds to at least one BWP.

**11.** An apparatus for transmitting a sounding reference signal, comprising:
a determining module, configured to determine that a frequency domain range for actually transmitting a Sounding Reference Signal, SRS, is an overlapping part of a frequency domain range of a configured SRS and a frequency domain range of an activated BandWidth Part, BWP, in response to a part of the frequency domain range of the configured SRS being not within the frequency domain range of the activated BWP.

**12.** An apparatus for transmitting a sounding reference signal, comprising a processor and a computer-readable storage medium storing instructions, wherein the instructions, when executed by the processor, cause the processor to perform the method for transmitting a sounding reference signal of one of claims 1 to 10.

**13.** A computer-readable storage medium, storing a computer program, wherein the computer program, when executed by a processor, causes the processor to perform the steps of the method for transmitting a sounding reference signal of one of claims 1-10.

**14.** A system for transmitting a sounding reference signal, comprising:

a first node, configured to determine that a frequency domain range for actually sending an SRS is an overlapping part of a frequency domain range of a configured SRS and a frequency domain range of an activated BWP, in response to a part of the frequency domain range of the configured SRS being not within the frequency domain range of the activated BWP; and
a second node, configured to determine that a frequency domain range for actually receiving the SRS is an overlapping part of the frequency domain range of the configured SRS and the frequency domain range of the activated BWP, in response to a part of the frequency domain range of the configured SRS being not within the frequency domain range of the activated BWP.

**15.** The system of claim 14, wherein,
the first node is further configured to:
determine a frequency hopping pattern for actually sending the SRS according to a frequency hopping pattern of the configured SRS and the frequency domain range for actually transmitting the SRS, in response to SRS frequency hopping being enabled; and the second node is further configured to:
determine a frequency hopping pattern for actually receiving the SRS according to the frequency hopping pattern of the configured SRS and the frequency domain range for actually transmitting the SRS, in response to the SRS frequency hopping being enabled.

**16.** The system of claim 14 or 15, wherein,

the first node is further configured to:
determine that the frequency domain range for actually sending the SRS is the frequency domain range of the configured SRS, in response to the frequency domain range of the configured SRS being within the frequency domain range of the activated BWP; and
the second node is further configured to:
determine that the frequency domain range for actually receiving the SRS is the frequency domain range of the configured SRS, in response to the frequency domain range of the configured SRS being within the frequency domain range of the activated BWP.

**17.** The system of claim 16, wherein,

the first node is further configured to:
determine that a starting position for actually sending the SRS is a starting sending position of the configured SRS, and that a total bandwidth for actually sending the SRS is $N_{SRS}^{BW} = N_{BWP}^{size} - n_{shift} N_{SRS}^{BW} = N_{BWP}^{size} - n_{shift}$, in response to the starting sending position of the configured SRS being within the frequency domain range of the activated BWP and the total sending bandwidth of the configured SRS satisfying $Csrs \le N_{BWP}^{size} + \ N_{BWP}^{start} - n_{shift} Csrs \le N_{BWP}^{size} + N_{BWP}^{start} - n_{shift}$; and
the second node is further configured to:
determine that a starting position for actually receiving the SRS is the starting sending position of the configured SRS, and that a total bandwidth for actually receiving the SRS is $N_{SRS}^{BW} = N_{BWP}^{size} - n_{shift} N_{SRS}^{BW} = N_{BWP}^{size} - n_{shift}$, in response to the starting sending position of the configured SRS being within the frequency domain range of the activated BWP and the total sending bandwidth of the configured SRS satisfying $Csrs \le \ N_{BWP}^{size} + N_{BWP}^{start} - n_{shift}$;
wherein *Csrs* is the total sending bandwidth of the configured SRS, $N_{BWP}^{size}$ is a bandwidth of the activated BWP, $N_{BWP}^{start}$ is a starting position of the activated BWP, and $n_{shift}$ is the starting sending position of the configured SRS;

**18.** The system of claim 17, wherein the starting sending position of the configured SRS being within the frequency domain range of the activated BWP comprises:

the starting sending position of the configured SRS satisfying $n_{shift} \geq N_{BWP}^{start}$,

wherein $n_{shift}$ is the starting sending position of the configured SRS, and $N_{BWP}^{start}$ is the starting position of the activated BWP.

**19.** The system of claim 14 or 15, wherein,

the first node is further configured to:

in response to at least one of followings being satisfied:

the starting sending position of the configured SRS is not within the frequency domain range of the activated BWP; and
the ending sending position of the configured SRS is not within the frequency domain range of the activated BWP;

perform at least one of followings:

determining that a starting position for actually sending the SRS is the starting position of the activated BWP or the starting sending position of the configured SRS; and

determining that a total bandwidth for actually sending the SRS is $N_{SRS}^{BW} = N_{BWP}^{size}$ or $N_{SRS}^{BW} = C_{srs} - N_{BWP}^{start}$ or $N_{SRS}^{BW} = N_{BWP}^{size} - n_{shift}$; and

the second node is further configured to:

in response to that at least one of followings being satisfied:

the starting sending position of the configured SRS being not within the frequency domain range of the activated BWP; and
the ending sending position of the configured SRS being not within the frequency domain range of the activated BWP;

perform at least one of followings:

determining that a starting position for actually receiving the SRS is the starting position of the activated BWP or the starting sending position of the configured SRS; and

determining that the total bandwidth for actually receiving the SRS is $N_{SRS}^{BW} = N_{BWP}^{size}$ or $N_{SRS}^{BW} = C_{srs} - N_{BWP}^{start}$ or $N_{SRS}^{BW} = N_{BWP}^{size} - n_{shift}$;

wherein *Csrs* is the total sending bandwidth of the configured SRS, $N_{BWP}^{size}$ is the bandwidth of the activated BWP, $N_{BWP}^{start}$ is the starting position of the activated BWP, $N_{SRS}^{BW}$ is the total bandwidth for actually transmitting the SRS, and $n_{shift}$ is the starting sending position of the configured SRS.

**20.** The system of claim 19, wherein, the starting sending position of the configured SRS being not within the frequency domain range of the activated BWP comprises:

the starting sending position of the configured SRS satisfying $n_{shift} < N_{BWP}^{start}$,

wherein $n_{shift}$ is the starting sending position of the configured SRS, and $N_{BWP}^{start}$ is the starting position of the activated BWP.

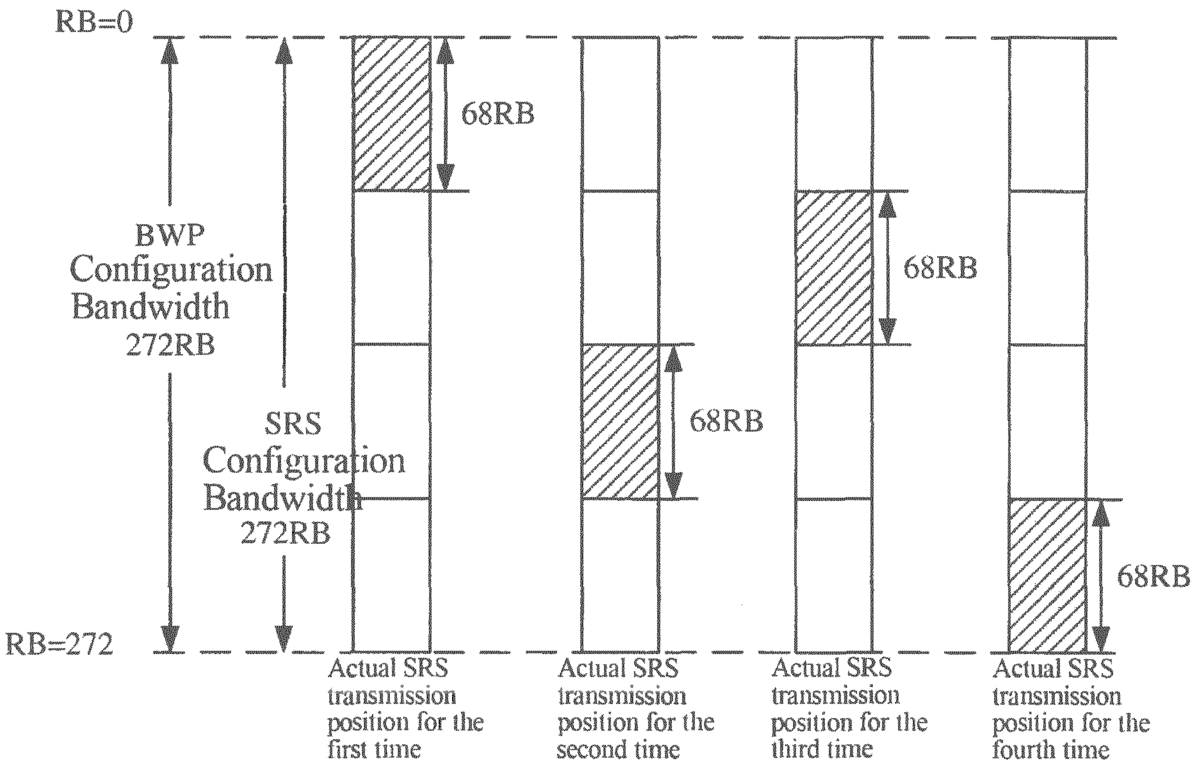
RB=0
RB=272
BWP
Configuration
Bandwidth
272RB
SRS
Configuration
Bandwidth
272RB
68RB
68RB
68RB
68RB
Actual SRS transmission position for the first time
Actual SRS transmission position for the second time
Actual SRS transmission position for the third time
Actual SRS transmission position for the fourth time

Fig. 1

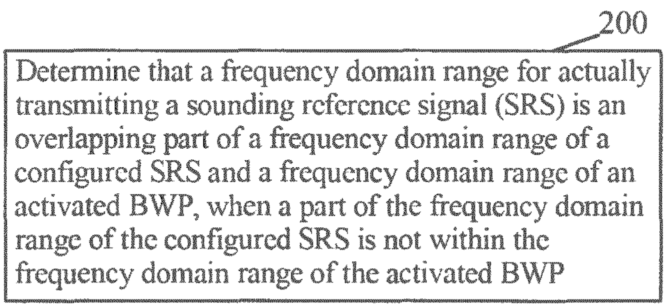
200
Determine that a frequency domain range for actually transmitting a sounding reference signal (SRS) is an overlapping part of a frequency domain range of a configured SRS and a frequency domain range of an activated BWP, when a part of the frequency domain range of the configured SRS is not within the frequency domain range of the activated BWP

Fig. 2

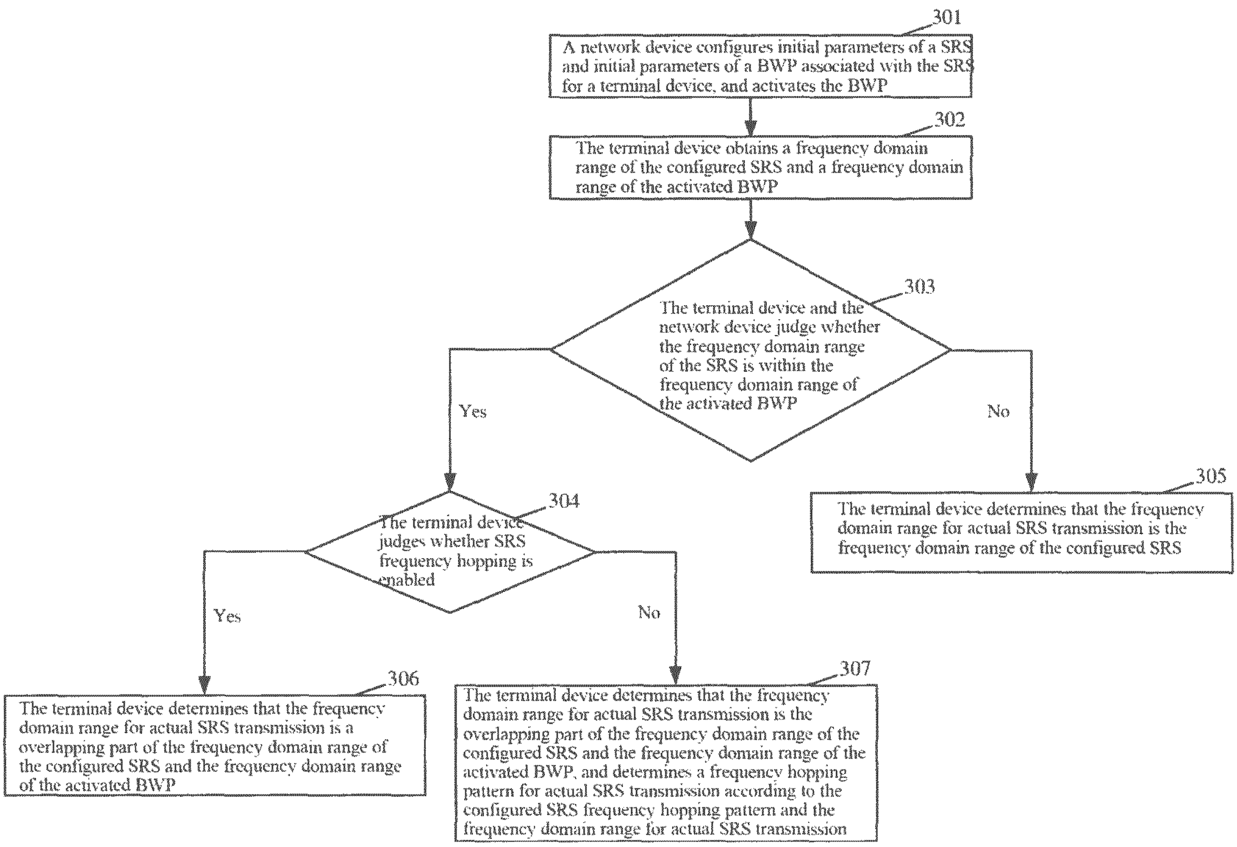
301
A network device configures initial parameters of a SRS and initial parameters of a BWP associated with the SRS for a terminal device, and activates the BWP
302
The terminal device obtains a frequency domain range of the configured SRS and a frequency domain range of the activated BWP
303
The terminal device and the network device judge whether the frequency domain range of the SRS is within the frequency domain range of the activated BWP
Yes
No
305
The terminal device determines that the frequency domain range for actual SRS transmission is the frequency domain range of the configured SRS
304
The terminal device judges whether SRS frequency hopping is enabled
Yes
No
306
The terminal device determines that the frequency domain range for actual SRS transmission is a overlapping part of the frequency domain range of the configured SRS and the frequency domain range of the activated BWP
307
The terminal device determines that the frequency domain range for actual SRS transmission is the overlapping part of the frequency domain range of the configured SRS and the frequency domain range of the activated BWP, and determines a frequency hopping pattern for actual SRS transmission according to the configured SRS frequency hopping pattern and the frequency domain range for actual SRS transmission

Fig. 3

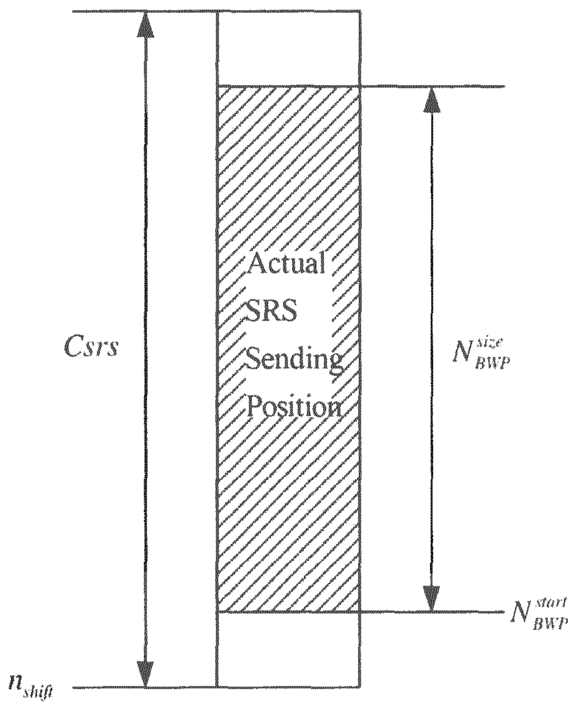
Csrs
Actual
SRS
Sending
Position
$N_{BWP}^{size}$
$N_{BWP}^{start}$
$n_{shift}$

Fig. 4a

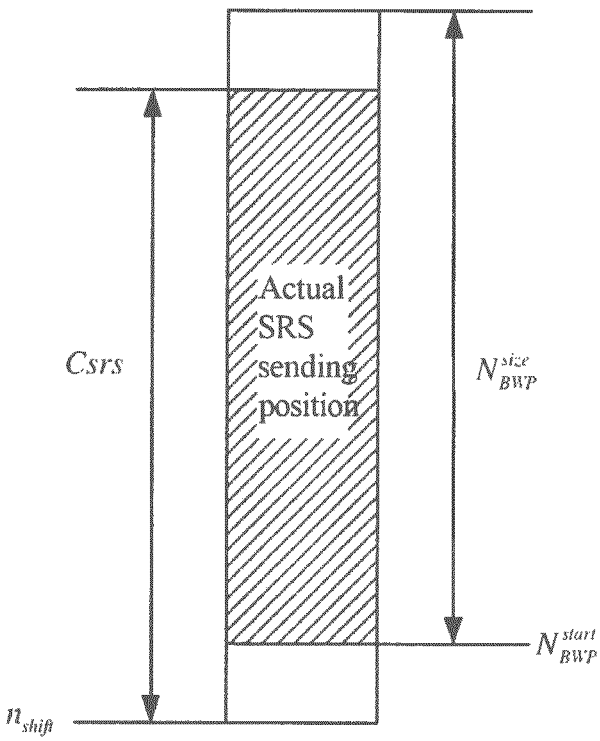
Csrs
Actual
SRS
sending
position
$N_{BWP}^{size}$
$N_{BWP}^{start}$
$n_{shift}$

Fig. 4b

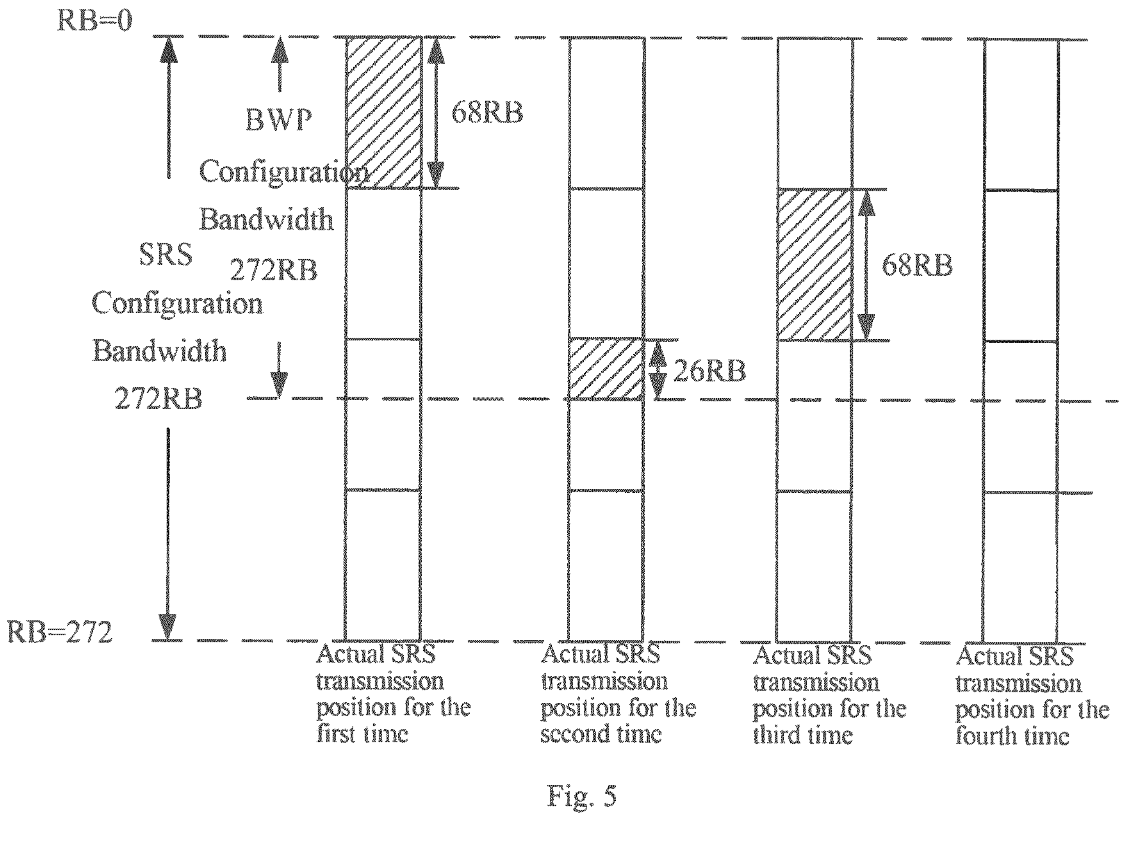
RB=0
BWP
Configuration
Bandwidth
272RB
SRS
Configuration
Bandwidth
272RB
68RB
26RB
68RB
RB=272
Actual SRS transmission position for the first time
Actual SRS transmission position for the second time
Actual SRS transmission position for the third time
Actual SRS transmission position for the fourth time

Fig. 5

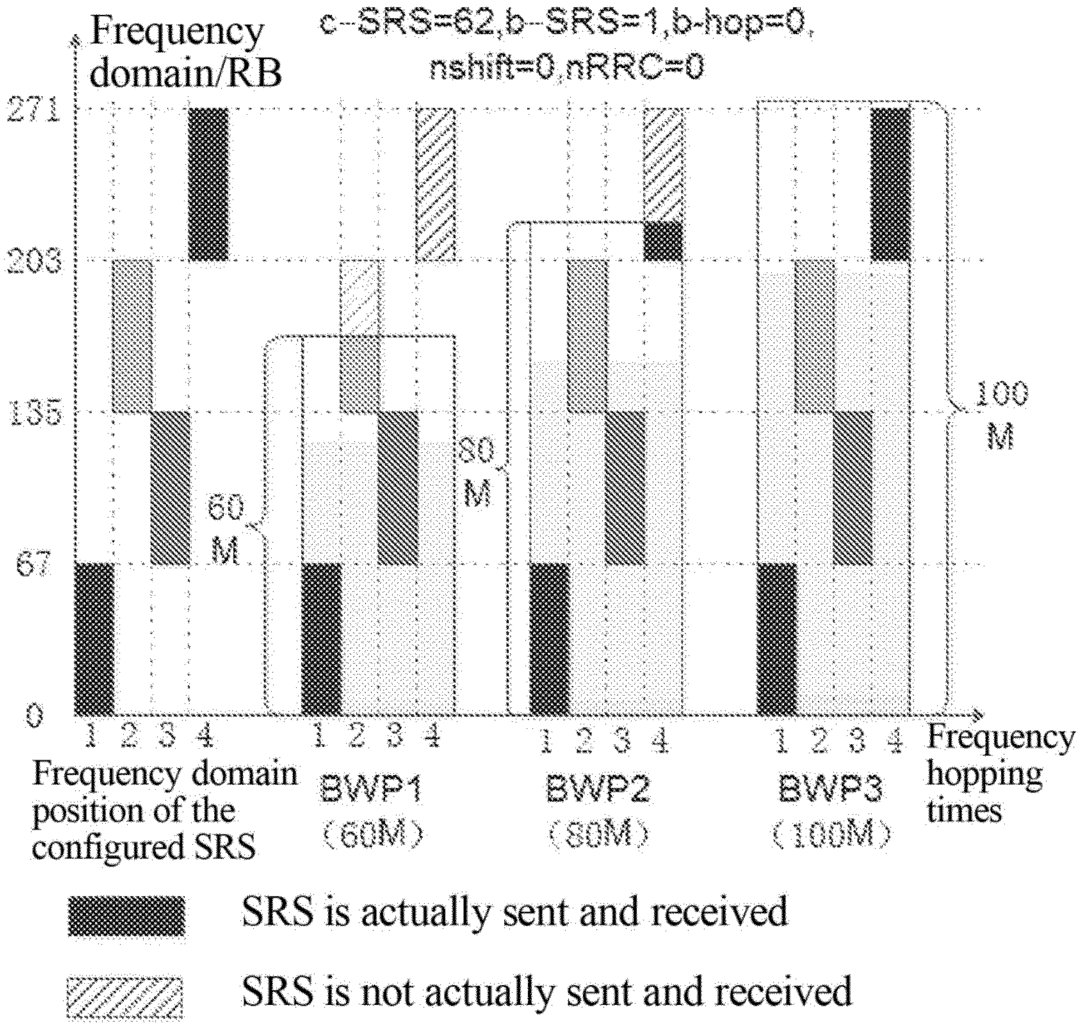


Fig. 6

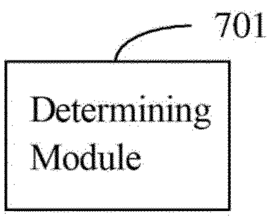


Fig. 7

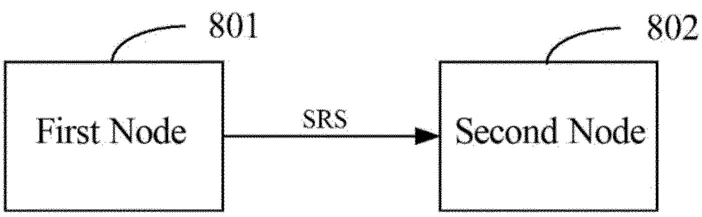


Fig. 8

## INTERNATIONAL SEARCH REPORT

International application No.
**PCT/CN2019/130249**

**A. CLASSIFICATION OF SUBJECT MATTER**

H04W 24/02(2009.01)i

According to International Patent Classification (IPC) or to both national classification and IPC

**B. FIELDS SEARCHED**

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

CNPAT, WPI, EPODOC, CNKI: 探测参考信号, 激活, 部分带宽, 重叠, 频域, 上行共享信道, SRS, activate, BWP, overlap, frequency domain, PUSCH

**C. DOCUMENTS CONSIDERED TO BE RELEVANT**

| Category* | Citation of document, with indication, where appropriate, of the relevant passages | Relevant to claim No. |
|---|---|---|
| X | WO 2019029536 A1 (HUAWEI TECHNOLOGIES CO., LTD.) 14 February 2019 (2019-02-14)<br>description, page 16, line 3 to page 17, line 6 and pages 49-50 | 1-20 |
| A | WO 2018231867 A1 (INTEL IP CORPORATION) 20 December 2018 (2018-12-20)<br>entire document | 1-20 |
| A | CN 107911203 A (HUAWEI TECHNOLOGIES CO., LTD.) 13 April 2018 (2018-04-13)<br>entire document | 1-20 |
| A | CN 108111280 A (ZTE CORPORATION) 01 June 2018 (2018-06-01)<br>entire document | 1-20 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **22 February 2020** | **01 April 2020** |

| Name and mailing address of the ISA/CN | Authorized officer |
|---|---|
| **China National Intellectual Property Administration**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2019/130249**

| Patent document cited in search report | Publication date (day/month/year) | Patent family member(s) | Publication date (day/month/year) |
|---|---|---|---|
| WO 2019029536 A1 | 14 February 2019 | CN 107911203 A | 13 April 2018 |
| | | CN 109672514 A | 23 April 2019 |
| | | CN 109495232 A | 19 March 2019 |
| WO 2018231867 A1 | 20 December 2018 | CN 110622457 A | 27 December 2019 |
| CN 107911203 A | 13 April 2018 | CN 109672514 A | 23 April 2019 |
| | | CN 109495232 A | 19 March 2019 |
| | | WO 2019029536 A1 | 14 February 2019 |
| CN 108111280 A | 01 June 2018 | WO 2019047940 A1 | 14 March 2019 |

Form PCT/ISA/210 (patent family annex) (January 2015)